# EUROPEAN PATENT APPLICATION

(11) **EP 0 863 053 A1**
(43) Date of publication of application: **09.09.1998**
(21) Application number: 97500101.7
(22) Date of filing: 06.06.1997
(51) Int. Cl.: B60R 13/04, B60J 10/08, B60J 10/00, B60R 13/07

(54) **Water-deflecting moulding for motor vehicles**

(30) Priority: 05.03.1997 ES 9700578
(71) Applicant: Perfils Tecnics, S.A. "Pertecsa", 08184 Palau de Plegamans (Barcelona) (ES)
(72) Inventor: Fernandez Menendez, Ramon, 08290 Cerdanyola (Barcelona) (ES)
(74) Representative: Durán Olivella, Alfonso

(57) **Abstract**

The moulding comprises two profiles (1,2) which are fitted to one another under pressure, the first (1) of which constitutes a base for fitting and securing to the bodywork of the vehicle, and the other (2) of which is to close the top of the water-deflector, the first (1) being produced from a flexible plastics material and the second (2) being produced from a hard plastics material and having an internal metal reinforcement (5), the first (1) having side regions for fitting under pressure in the receiving guides of the vehicle roof, and strips of adhesive material (6,7) on its lower face for securing it to the vehicle roof, while the second element (2) of the water-deflector, which is to be painted at the same time as the bodywork of the vehicle, has several projecting ribs (11,12,13) which are to be fitted under pressure in grooves (8,9,10) of the base profile, and a side wing which is to fit on the portion of larger cross-section of the base profile to define a side of the groove for the deflection of water.

## Description

The present invention relates to a water-deflecting moulding or profile for motor vehicles, of the type fitted to the roof of the bodywork of motor vehicles, on both sides thereof and in the longitudinal direction, in order to trap rainwater, washing water, etc. thus preventing it from running over the sides.

Water-deflecting mouldings are currently known which are produced especially from extruded materials forming a single profile which is incorporated in the roof of the bodywork of the vehicle in the longitudinal direction and is secured to the bodywork of the vehicle by means of clamps.

The present invention is to obtain advantages over the prior art and is especially to facilitate the painting of the bodywork with the fitted water-deflectors without having to screen or mask the areas that are not to be painted and facilitating production. At the same time, the profile forming the subject-matter of the present invention achieves a substantial reduction in costs by eliminating the clamps and the operations required for mounting them. In addition, it substantially facilitates the installation of roof racks for the transport of objects on the roof of the vehicle bodywork.

In order to achieve those aims, the profile forming the subject-matter of the present invention is composed of two parts, one of which is fitted to the bodywork and is held thereon by the insertion of shaped lateral edges of the profile in housings or grooves formed in the bodywork of the vehicle and also by means of strips of adhesive type at the securing base, there being fitted to said base profile a second part which constitutes the upper part of the profile and which is visible from the outside and preferably has an internal steel coupling reinforcement. The base profile also has a series of side recesses in which are fitted, without the necessity for mechanization or for the formation of openings, some special supports for movable covers which facilitate access to the securing points arranged on the roof of the vehicle for a support base or similar elements.

The base part of the extruded profile is produced from a flexible plastics material and the upper part is produced from a rigid plastics material having a metal reinforcing core which limits expansion caused by changes in temperature.

The elements making up the water-deflectors are produced by a combination of extrusion and subsequent thermo-shaping, for the purpose of obtaining improved precision and dimensional stability.

In order to explain the invention more clearly, some explanatory drawings of a water-deflecting moulding produced in accordance with the present invention are appended by way of non-limiting explanatory example.

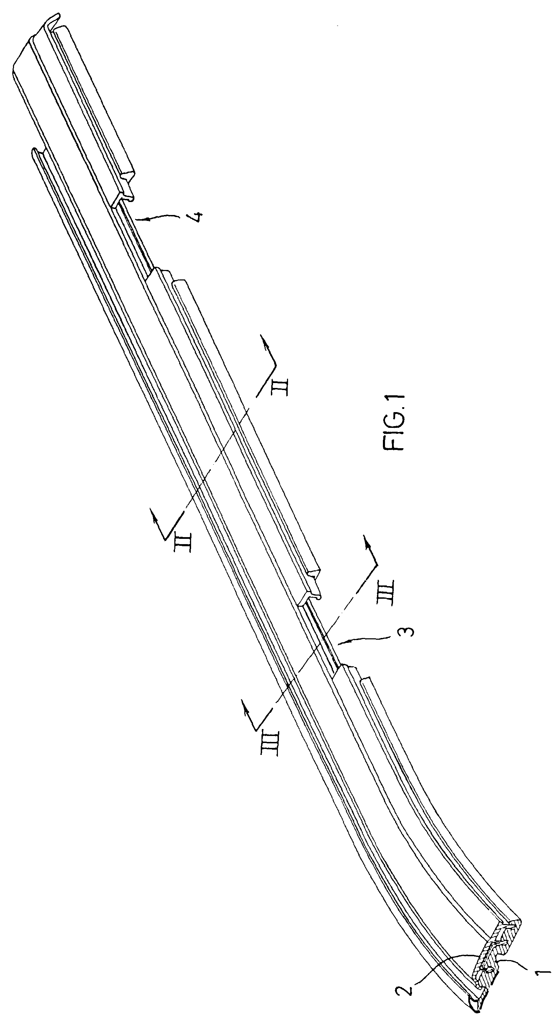

Figure 1 is a perspective view, with cross-section, of a water-deflector formed by the lower or base part and the upper part inserted therein.

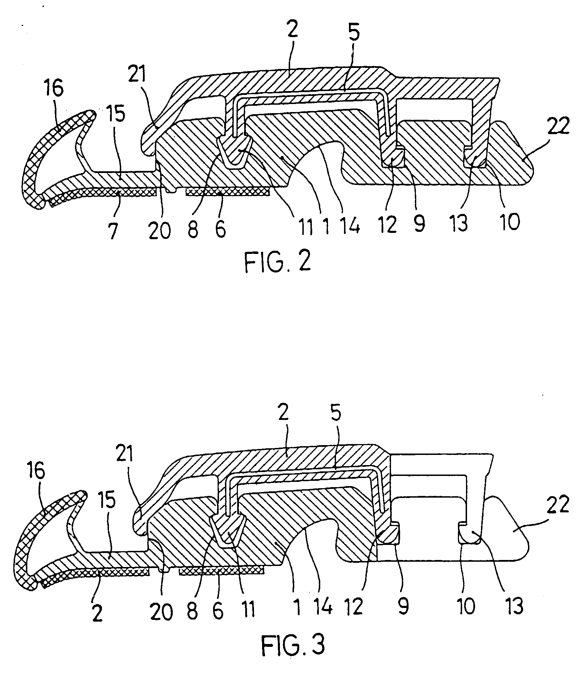

Figures 2 and 3 are cross-sections through the profile of Figure 1 on the indicated sectional planes.

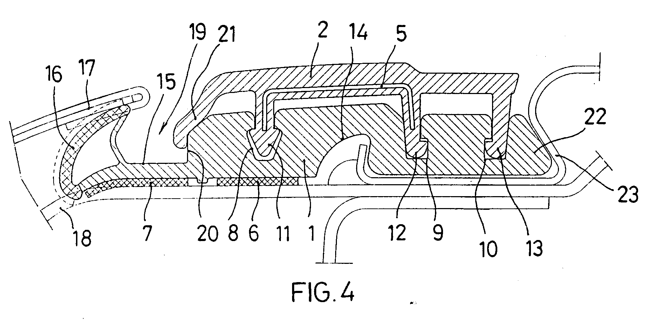

Figure 4 is a cross-section through a profile according to the invention fitted to the bodywork of a motor vehicle.

Figures 5 and 6 are cross-sections representing a water-deflector according to the present invention with a cover for access to a securing point on the roof, in the open and closed position, respectively.

Figure 7 is a perspective and partially sectional view of a cover according to Figures 5 and 6.

Figures 8, 9 and 10 are details of the cover shown in Figure 7.

Figures 11 and 12 are a perspective view and an elevation, respectively, with partial section, of the support of the cover shown in Figures 7 to 10.

As shown in the drawings, the water-deflector forming the subject-matter of the present invention comprises a base profile 1 which is to be accommodated and secured on the bodywork of the vehicle and a second profile 2 fitted under pressure to the first, both profiles having recesses, such as 3 and 4, at the points previously formed along the bodywork of the vehicle for access to the securing points of the bodywork.

The base 1 of the profile is produced from a flexible plastics material, while the upper part 2 of the profile which is joined to the base 1 by insertion under pressure is produced from a hard plastics material, the inside of which is provided with a metal reinforcement 5 that is to reduce deformation resulting from thermal expansion.

The arrangement in two parts facilitates both the securing of the water-deflector and the painting of the same integrally with the bodywork.

The base 1 carries lower adhesive strips, such as 6 and 7, which secure it to the bodywork of the vehicle, and also has a structure which is characterised by the arrangement of several grooves or inlets, such as 8, 9 and 10, receiving the ribs 11, 12 and 13 which fit under pressure inside the mentioned inlets or grooves and which preferably each have end heads of larger dimensions which are retained in the inside, likewise of larger dimensions, of the inlets or grooves 8, 9 and 10. A wide lower groove 14 confers flexibility and adaptability to the base 1 and a laminar extension 15 arranged on one side terminates in a hollow rib 16 which is to be introduced into the cavity formed between an upper wing 17 and the roof 18 of the vehicle, providing leak-proofness and retention. The cavity 19 delimited between the end profile 16, the laminar extension 15 and the end of the central region or body of the profile 1, of which the front wall 20 has been shown, is to receive the water passing towards the sides of the roof, conveying it to the front and to the back and thus preventing it from reaching the region of the doors where it could constitute a nuisance at the moment of opening the doors to enter or leave the vehicle.

The upper element 2, in addition to the plurality of retaining ribs, such as 11, 12 and 13, has an end wing 21 which fits onto the upper portion of the front wall 20 of the body 1 when the part 2 is mounted on the base 1.

At the opposite end to the profile 16, the base 1 terminates in a substantially wedge-shaped extension 22 which is to be introduced into the groove 23 formed in that region by the bodywork of the vehicle, thus permitting excellent fitting of the base and a secure retention of the same without the necessity for clamps, the end profile 16, the end wedge 22 and the lower adhesive strips 6 and 7 all contributing to this retention.

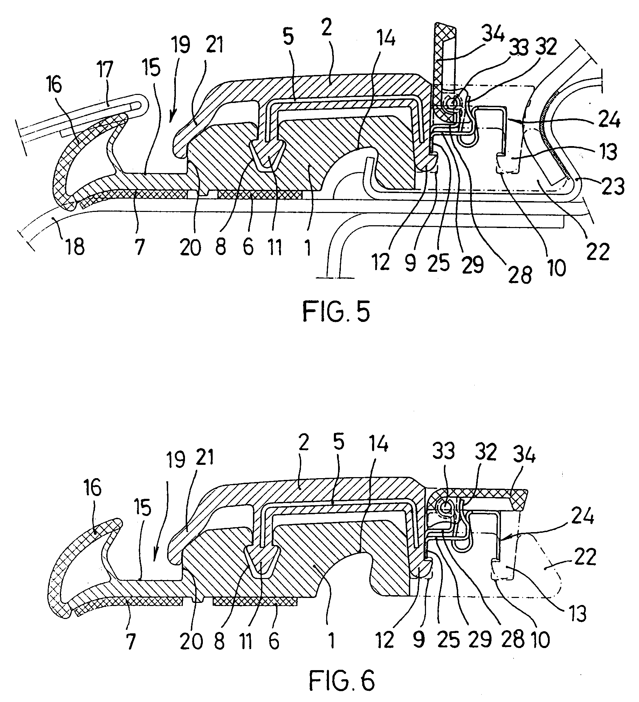

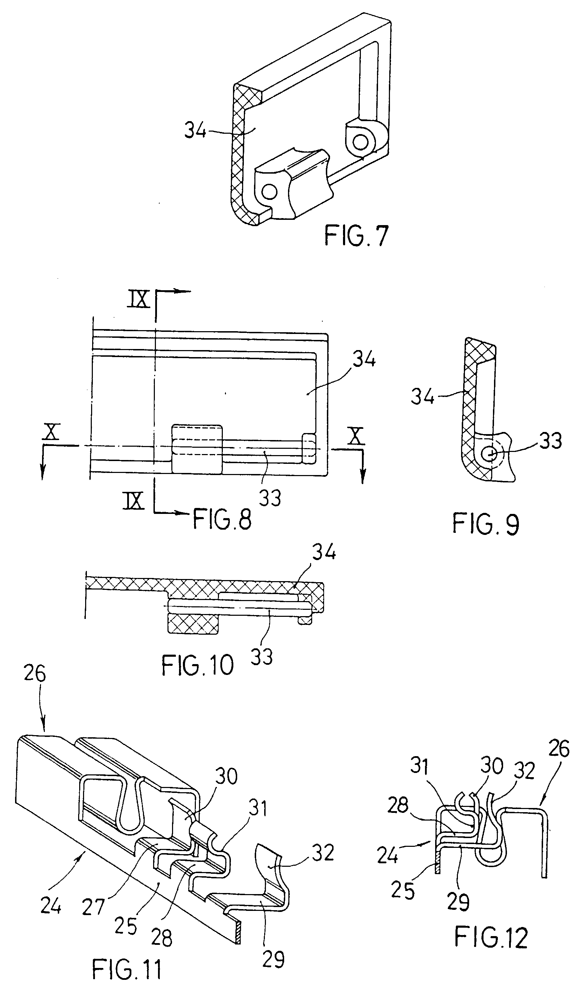

In accordance with the present invention, a supports in the form of shaped springs, one of which has been indicated generally with the numeral 24 in Figures 11 and 12, are fitted in the recesses 3 and 4. The spring-form element 24 comprises an approximately straight and linear central body 25 and two end fastening bodies of resilient, prismatic general structure, only one of which has been indicated in Figure 11 with the numeral 26, although there is another, similar element at the other end of the linear element 1. The linear intermediate element or portion 25 comprises a series of appendages bent substantially in an L-shape and having different lengths and structures, three types 27, 28 and 29 being shown in Figure 11. The appendages 27, 28 and 29 have substantially vertical arms 30, 31 and 32, respectively, which are straight, slightly curved and curved in an S-shape. This arrangement makes it possible to hold securely the shaft 33 of a tilting element 34 which acts as a cover and which has been shown in section in Figures 7 to 10 and the relative arrangement of which in the water-deflector has been shown in detail in Figures 5 and 6. The spring-form element 24 is held by the two prismatic end heads inside the water-deflecting assembly, while, by means of the intermediate L-shaped appendages, it permits the securing of the shaft 33 for the free tilting of the cover 34 which is to close the securing points of the vehicle roof for fastening a roof rack for transporting objects or other similar elements.

## Claims

1. Water-deflecting moulding for motor vehicles, of the type which comprises a moulded profile of synthetic material which is inserted under pressure in longitudinal guides of the vehicle roof to form the channel for the removal of water, characterised in that it is formed from two profiles fitted to one another under pressure, the first of which constitutes a base for fitting and securing to the bodywork of the vehicle, and the other of which is to close the top of the water-deflecting moulding, the first being produced from a flexible plastics material and the second being produced from a hard plastics material and having an internal metal reinforcement, the first having side regions for fitting under pressure in the receiving guides of the vehicle roof, and strips of adhesive material on its lower face for securing it to the vehicle roof, while the second element of the water-deflector, which is to be painted at the same time as the bodywork of the vehicle, has several projecting ribs which are to be fitted under pressure in grooves in the base profile, and a side wing which is to fit on the portion of larger cross-section of the base profile to define a side of the groove for the deflection of water.

2. Water-deflecting moulding for motor vehicles according to Claim 1, characterised in that the base element of the water-deflecting profile comprises, along one of its sides, a projection having a wedge-shaped cross-section for fitting under pressure in the groove of the vehicle roof, while the opposite edge has a substantially triangular hollow profile with curved sides for fitting in the receiving guide of the vehicle roof, enabling, together with the adhesive strips, the water-deflecting profile to be secured without the aid of clamps.

3. Water-deflecting moulding for motor vehicles according to the preceding Claims, characterised in that it has recesses along one of the edges, which recesses are spaced apart from one another and carry tilting covers which permit access to the securing points of the vehicle roof, the covers being secured, by means of shafts secured thereto, in clips which are incorporated in the water-deflecting profile and which have resilient appendages for the retention under pressure of the shaft of the rotating cover.

4. Water-deflecting moulding for motor vehicles according to Claim 3, characterised in that the clips for fastening the shafts of the tilting covers have a straight elongate laminar structure with ends of substantially resilient prismatic shape for fitting in the water-deflecting profile, and a central rectilinear region provided with a plurality of L-shaped resilient appendages having horizontal arms of different lengths and vertical arms bent in different manners for the resilient fastening of the shaft of the tilting cover.
